# EUROPEAN PATENT APPLICATION

(11) **EP 1 459 962 A2**
(43) Date of publication of application: **22.09.2004**
(21) Application number: 04003402.7
(22) Date of filing: 16.02.2004
(51) Int. Cl.: B62D 6/10, G01L 5/22

(54) **Power steering device and zero-point setting device for torque sensor in power steering device**

(30) Priority: 18.03.2003 JP 2003073041; 03.04.2003 JP 2003100807
(71) Applicant: TOYODA KOKI KABUSHIKI KAISHA, Kariya-shi Aichi-ken (JP)
(72) Inventor: Katou, Hideki, Kariya-shi Aichi-ken (JP); Asada, Atsuhisa, Kariya-shi Aichi-ken (JP); Fukumoto, Yasutaka, Toyota-shi Aichi-ken (JP); Kamimae, Hajime, Toyota-shi Aichi-ken (JP); Naruse, Mitsunori, Kariya-shi Aichi-ken (JP); Matsumoto, Tsutomu, Kariya-shi Aichi-ken (JP)
(74) Representative: Trösch, Hans-Ludwig

(57) **Abstract**

A power steering device (100) is provided which is capable of detecting an initial torque of torque detection means (10) precisely in a short period of time in the initial setting therefor. In detecting the initial torque of the torque detection means (10), assist power generating means such as an electric motor (20) for applying assist power to a handle shaft (2) is used to rotate a steering handle (1) within a minute rotational range in positive and negative-going directions from a neutral position in the steering direction. The rotation of the steering handle (1) in this initial setting is performed so that the amplitude of the repetitive rotations in the positive and negative-going directions are decremented as time passes. Then, an output of the torque detection means (10) is detected as the initial torque with the steering handle (1) being held stationarily at the neutral position. In another aspect of the present invention, a zero-point detection device for a torque sensor (10) in a power steering device is provided having steerable wheel (6) oscillating means which comprises turntables rotatable within a minute rotational range in positive and negative going directions and a turntable oscillating device for oscillating the turntables within the minute angular range in its steering direction by applying a drive power of a decremental pattern so that the amplitude of the oscillation is decreased gradually. Upon termination of the oscillation, an output of the torque detection means (10) is detected as the initial torque with the steering handle (1) being held stationarily at the neutral position.

## Description

### INCORPORATION BY REFERENCE

This application is based on and claims priority under 35 U.S.C. sctn. 119 with respect to Japanese Applications No. 2003-73041 and No. 2003-100807 filed respectively on March 18 and April 3, 2003, the entire contents of which are incorporated herein by reference.

### BACKGROUND OF THE INVENTION

### Field of the Invention:

The present invention relates to a power steering device for vehicles such as automobiles or motorcars, and more particularly, to a power steering device capable of detecting an origin or zero-point torque of a torque sensor incorporated therein. It also relates to a zero-point setting device for a torque sensor incorporated in such a power steering device.

### Discussion of the Related Art:

Heretofore, power assist mechanisms (power steering devices) for steering manipulation have been widespread as steering devices of vehicles and particularly, as those of automobiles or motorcars. For this reason, these days such power steering devices are installed on almost all the motorcars manufactured in factories. Therefore, it is often the case that the repair or replacement of such power steering devices is done at car dealers regardless of whether new cars or used cars. Generally, such power steering devices are of the type that the steering torque applied to a handle shaft through a steering handle is detected by torque detection means and that a drive power corresponding to the detected torque is generated by assist power generating means such as an electric motor and is transmitted to steerable wheels, as exemplified in Japanese unexamined, published patent applications No. 2000-168597 and No. 2001-341656.

By the way, in assembling or inspecting the aforementioned power steering devices in the manufacturing stage in factories or in repairing or replacing the same at the stage of car dealers, cares have to be taken to the following respects.
(1) Residual torque remaining as hysteresis between the steering handle and the torque detection means; this means the torque which is generated as imperfect returning of the steering handle by the cause of friction or the like in a transmission system between the steering handle and the torque detection means even after the applied torque has been removed.
(2) Origin torque caused by the difference in origin position between a pair of angle detection sensors in the case that the torque detection means is composed of a torsion bar and the pair of angle detection sensors installed apart in the axial direction of the torsion bar. In the case of a pair of angle detection sensors like, e.g., twin resolvers as disclosed in Japanese unexamined, published patent application No. 2001-194251, it is quite difficult in ordinary manufacturing sites to assemble both sensors with the mounting angle positions thereof being completely in coincidence with each other, and thus, it is unavoidable that the torque detection means detects and indicates a torque which includes the torque (origin torque) depending on the difference between origin positions of the both sensors. In order to obviate this drawback, it has been customary that after the pair of angle detection sensors are assembled, a zero-point torque (i.e., origin torque) which is generated by the cause of the difference in origin position between the sensors is measured with the steering handle held at the neutral position and is stored as an initial value in a control section of the power steering device. In the subsequent regular operation of the power steering device, a nominal steering torque detected by the angle detection sensors is compensated for the zero-point torque error, so that the steering torque applied to the steerable wheels can be determined based on the compensated steering torque.

In the initial setting of steering control of the power steering device, the steering handle is stationarily held at a neutral position in the steering direction with the applied torque having been removed, in which state the torque detection means then detects and indicates an initial torque. This initial torque includes an origin torque corresponding to the assembling error in manufacturing and a residual torque generated due to the imperfect returning of the steering handle. Of these torques, the origin torque cannot be eliminated unless the torque detection device is disassembled and adjusted. However, the origin torque exists as a peculiar value (i.e., constant value) to the device to be compensated easily. Therefore, the origin torque is relatively small in the influence upon the,regular steering control insofar as the value thereof is specified at the time of the initial setting.

With respect to the residual torque, on the contrary, where the same remains involved in the detection value of the initial toque at the time of the initial setting, the residual torque is liable to cause wrong steering control when the imperfect returning of the steering handle is corrected upon shifting to the regular steering control state. And, the influenced by the residual torque is liable to be more exerted on a power steering device of rack assist type than on that of column assist type. The reason is that in the rack assist type power steering device, the assist power generating means and the torque detection means are provided close to the steering shaft (rack shaft) as shown in the aforementioned Japanese '597 application and hence that the distance between the steering handle and the torque detection means becomes longer than that in the column assist type power steering device wherein the assist power generating means and the torque detection means are provided on a steering column, as shown in the aforementioned Japanese '656 application.

Whether power steering devices are of the rack assist type or of the column type, heretofore, the assembling and inspection of the power steering devices in factories or the repair and the replacement of the same in car dealers have involved the following operations (i), (ii) and (iii), which have heretofore been done by hand (by worker).
(i) The operation for holding the steering handle stationarily at the neutral position in the steering direction.
(ii) The operation for reducing (or eliminating) the residual torque remaining as hysteresis, by rotating the steering handle about the handle axis within a minute angular range as the steering handle is reversed reciprocatively.
(iii) The operation for detecting the initial torque by torque detection means with the steering handle held stationarily at the neutral position in the steering direction.

However, in order to reduce (ideally, to eliminate) the residual torque to as small as zero in the aforementioned operation (ii), there is needed a long adjustment work by a skillful worker. This disadvantageously gives rise to problems such as an increase in the manufacturing cost, the adjustment error in car dealers due to the short of skillful mechanics and the like in installing power' steering devices as standard accessories on vehicles.

### SUMMARY OF THE INVENTION

Accordingly, it is a primary object of the present invention to provide an improved power steering device which is capable of easily decreasing a residual torque to the level that the same no longer obstructs the steering control, without needing an experienced technical skill and a long adjustment work, so that there can be accomplished a reduced cost and stable performance.

Briefly, according to a general form of the present invention, there is provided a power steering device of the type wherein a steering torque applied to a handle shaft through a steering handle is detected by torque detection means and wherein a drive power corresponding to the steering torque is applied from assist power generating means to steerable wheels. The power steering device comprises residual torque decreasing command means for operating the assist power generating means to turn the steering handle a minute rotational angle in positive and negative-going directions about a handle axis after the steering handle is once held stationarily at a neutral position in the steering direction so that a residual torque remaining as hysteresis between the steering handle and the torque detection means can be decreased.

With this configuration, the assist power generating means such as, e.g., electric motor which is provided on the power steering device for steering control is utilized to decrease (or eliminate) the residual torque. Thus, the operation for decreasing the residual torque can be carried out precisely in a short period of time without introducing a large-scale facility therefor. Further, since an initial torque of the torque detection means is detected after the residual torque is decreased, the rate at which the residual torque remains in the detected value of the initial torque becomes small. Accordingly, when the power steering device is then brought into the regular steering control state and is controlled based on the initial torque from which the residual torque has been eliminated, it can be prevented from being wrong operated, so that the stability in controlled can be enhanced.

In a more concrete form, a power steering device according to the present invention is of the type wherein a steering torque applied to a handle shaft through a steering handle is detected by torque detection means which is provided with a torsion bar and a pair of angle detection sensors arranged apart from each other in the axial direction of the torsion bar and wherein a drive power corresponding to the steering torque is applied from assist power generating means to steerable wheels. The power steering device comprises residual torque decreasing command means for operating the assist power generating means to turn the steering handle a minute rotational angle in positive and negative-going directions about a handle axis after the steering handle is once held stationarily at a neutral position in the steering direction, so that a residual torque remaining as hysteresis between the steering handle and the torque detection means can be decreased. The power steering device further comprises initial torque detection command means for making the assist power generating means terminate the minute angle rotational motion and for issuing a command to detect by the torque detection means an initial torque which is caused primarily by the difference in origin position between the pair of angle detection sensors with the residual torque being diminished.

According to the power steering device in the aforementioned more concrete form, like the earlier mentioned power steering device in the general form, decreasing (or eliminating) the residual torque from the output of the torque detection means can be performed precisely in a short period of time. Therefore, an origin torque of the torque detection means which is essential in manufacturing the power steering device can be detected as precisely and quickly as possible with the residual torque being decreased (or, eliminated) to the utmost.

In another aspect of the present invention, there is provided a zero-point setting device for a torque sensor in a power steering device having a torque sensor provided in a steering power transmission system from a steering handle to steerable wheels of a vehicle for detecting a steering torque and steering control means for controlling a steering drive device to apply a steering power to said steerable wheels. The zero-point setting device comprises steerable wheel oscillating means operable prior to detecting a zero-point torque error of the torque sensor in the state that the steerable wheels are held at a reference position such as a neutral position or the like with the steering handle being not given any steering torque applied thereto, for oscillating the steerable wheels within a minute angular range in the steering direction so that the amplitude of the oscillation is gradually decreased to the termination of the oscillation. The zero-point setting device further comprises zero-point torque detection means for detecting an output of the torque sensor as the zero-point torque error at or around at the termination of the oscillation, and storage means for storing the zero-point torque error in a storage area of the steering control means so that in the later actual operation of the steering drive device, the same is controlled by the steering control means based on a compensated torque which is calculated from both of an output of the torque sensor and the zero-point torque error stored in the storage means.

According to the zero-point setting device for a torque sensor in a vehicular power steering device, the operation for decreasing (or, eliminating) the residual torque remaining in the steering power transmission system can be performed precisely in a short period of time. Therefore, in the process of detecting an initial torque for the initial setting of the power steering device of the type having the torque detection means which is composed of a torsion bar and a pair of angle detection sensors, an origin torque of the torque detection means which is essential in manufacturing the power steering device can be detected as precisely and quickly as possible with the residual torque being decreased (or, eliminated) to the utmost.

### BRIEF DESCRIPTION OF THE ACCOMPANYING DRAWINGS

The foregoing and other objects and many of the attendant advantages of the present invention may readily be appreciated as the same becomes better understood by reference to the preferred embodiments of the present invention when considered in connection with the accompanying drawings, wherein like reference numerals designate the same or corresponding parts throughout several views, and in which:
Figure 1 is a schematic view showing the general construction of an electric power steering device as one example of a power steering device in the first embodiment according to the present invention;
Figure 2 is a flow chart of a steering control program for the electric power steering device shown in the first embodiment;
Figure 3 is a flow chart of an initial setting program executed in the routine shown in Figure 2 in the first embodiment;
Figures 4(a) and 4(b) are explanatory views showing the state of an operation for reducing a residual toque in accordance with the initial setting program in Figure 3;
Figure 5 is a flow chart showing a modified form of the initial setting program shown in Figure 3;
Figures 6(a) and 6(b) are explanatory views showing the state of an operation for reducing a residual toque in accordance with the initial setting program in Figure 5;
Figure 7 is a schematic view showing the general construction of a zero-point setting device for a torque sensor incorporated in a power steering device in the second embodiment according to the present invention;
Figure 8 is a schematic view showing the general construction of a residual torque elimination control section of the zero-point setting device;
Figure 9 is a flow chart of a steering control program for the electric power steering device shown in the second embodiment;
Figure 10 is a flow chart of a residual torque elimination control program and an initial setting program executed in the routine in the second embodiment; and
Figures 11(a) to 11(c) are explanatory view showing the operation of a modification of the residual torque elimination control section.

### DETAILED DESCRIPTION OF THE PREFERRED EMBODIMENTS

### (First Embodiment)

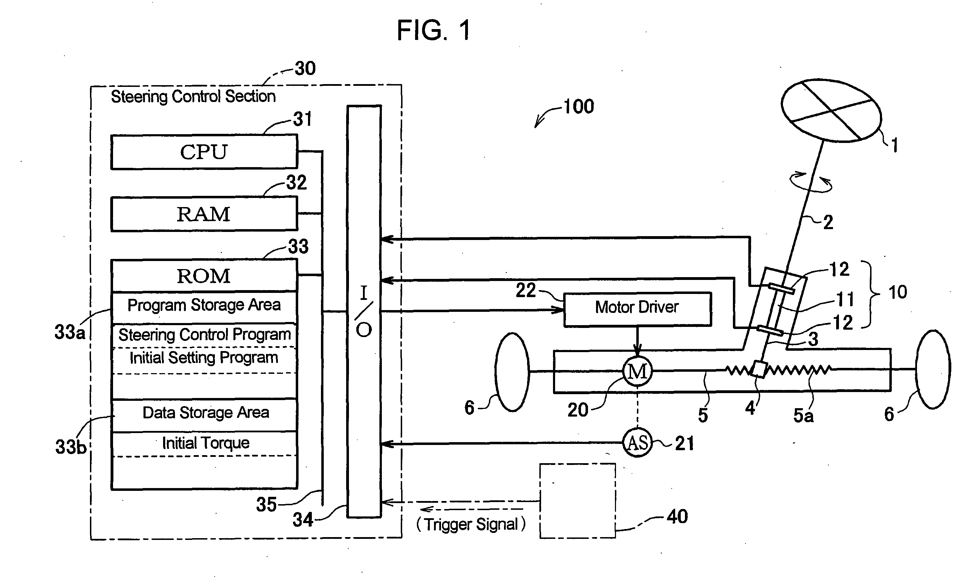

Hereafter, a power steering device in the first embodiment according to the present invention will be described with reference to the accompanying drawings. Figure 1 schematically shows the general construction of an electric power steering device as one example of the power steering devices to which the present invention is applied. Although the term "vehicle" used herein means an automobile or motorcar, the present inventions is not limited only to the automobile or motorcar. The electric power steering device 100 (hereinafter referred to as "power steering device") has a steering handle 1 connected to a handle shaft 2, and a pinion shaft 3 connected to the handle shaft 2 through a torsion bar 11 is provided with a pinion 4, which is in meshing engagement with rack teeth 5a of a steering shaft 5. The steering shaft 5, when moved reciprocatively in its axial direction, causes the steered angle of the steerable wheels 6, 6 to be altered. Further, on the steering shaft 5 of the power steering device 100, a D.C. assist motor 20 as assist power generating means is assembled coaxially through a ball screw mechanism (not shown). Thus, the power steering device 100 is constructed as of the rack assist type that the drive power of the assist motor 20 assists the reciprocative movement of the steering shaft 5 given by the steering handle 1.

A torque sensor 10 serving as torque detection means is provided between the handle shaft 2 and the pinion shaft 3. The torque sensor 10 is composed of the torsion bar 11 and a pair of resolvers 12, 12 installed spaced apart from each other in the axial direction of the torsion bar 11. The torsion bar 11 interconnects the facing ends of the handle shaft 2 and the pinion shaft 3, and the resolvers 12, 12 serve as angle detecting sensors. When the steering handle 1 is turned to twist the torsion bar 11, the angular difference between the axial opposite ends of the torsion bar 11 is detected by the resolvers 12, 12, and a steering torque applied or given to the handle shaft 2 is detected based on the angular difference detected by the resolvers 12, 12 and a spring constant of the torsion bar 11. On the other hand, the rotational angular position of the assist motor 20 is detected by a motor angular position detecting section 21 including a rotary encoder or the like. The assist motor 20 driven through a motor driver 22 generates a drive power (rotational power) corresponding to the steering torque detected by the torque sensor 10.

A control unit or section 30 includes a CPU (Central Processing Unit) 31, a RAM (Random Access Memory) 32, a ROM (Read-Only Memory) 33, an input/output interface 34 and the like, which are connected via a bus 35 for data transmission and receiving thereby to be constituted as a microcomputer. The ROM 33 has a program storage area 33a and a data storage area 33b. The program storage area 33a has stored therein a steering control program for controlling the foregoing steering angle and the steering torque, an initial setting program referred to later, and the like. The data storage area 33b has stored therein an initial torque referred to later and thus, performs the function as initial torque storage means. The CPU 31 performs many functions such as residual torque decreasing command means, initial torque detection command means, initial torque storage command means and the like which will be described later.

The initial setting program stored in the program storage area 33a is designed for detecting an initial torque to store the same in the data storage area 33b after decreasing (eliminating) a residual torque from the initial torque and makes it possible to use the detected initial torque as a compensation value for the steering torque in the steering control program. In this particular embodiment, an initial setting program is prepared to be started upon receipt of a particular trigger signal transmitted from a small-sized tester (i.e., a portable terminal device) 40 which is temporally brought into connection with the input/output interface 34. Therefore, it is easy for dealer mechanics to perform the initial setting (i.e., detecting and storing the initial torque) of each power steering device to be repaired or adjusted in the dealer service site or repair shop. Of course, in a modified form, there may be utilized an external microcomputer which is equipped in a manufacturing plant or the like, in which case the initial setting program may be downloaded from the microcomputer by way of a communication line, a suitable storage medium or the like to the steering control section 30, and the initial setting program may be started upon receipt of a trigger signal from the external microcomputer.

When having the trigger signal input thereto, the CPU 31 reads the initial setting program from the program storage area 33a of the ROM 33 and executes at least the following processing of the read-out program in the order of steps described below. That is, the CPU 31:
(i) after holding the steering wheel 1 stationarily at the neutral position in the steering direction, operates the assist motor 20 to turn the steering handle 1 right and left reciprocatively a minute rotational motion about the handle axis so that a residual torque remaining as hysteresis between the steering handle 1 and the torque sensor 10 can be decreased or eliminated,
(ii) makes the assist motor 20 terminate the minute rotational motion, and in the state that the residual torque has been diminished accordingly, detects by the torque sensor 10 an initial torque which is generated by the cause of the difference in origin position between the pair of resolvers 12, 12, and
(iii) then stores the detected initial torque as a compensation value for the steering torque, in the data storage area 33b (i.e., initial torque storage means) of the steering control section 30.

Desirably, the data storage area 33b may be constituted by an EPROM (Erasable Programmable Read-Only Memory) so that the initial torque can be written thereinto each time the initial setting is done.

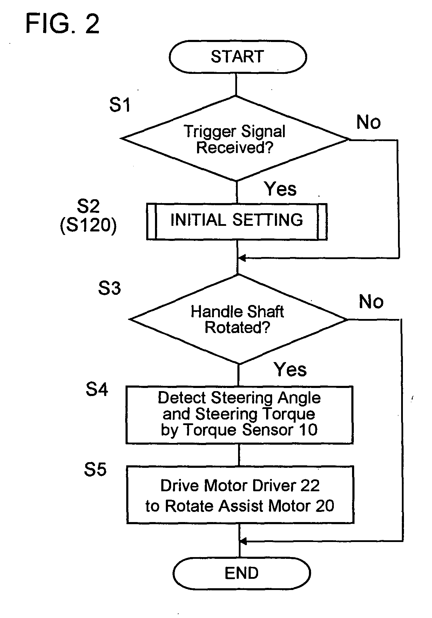

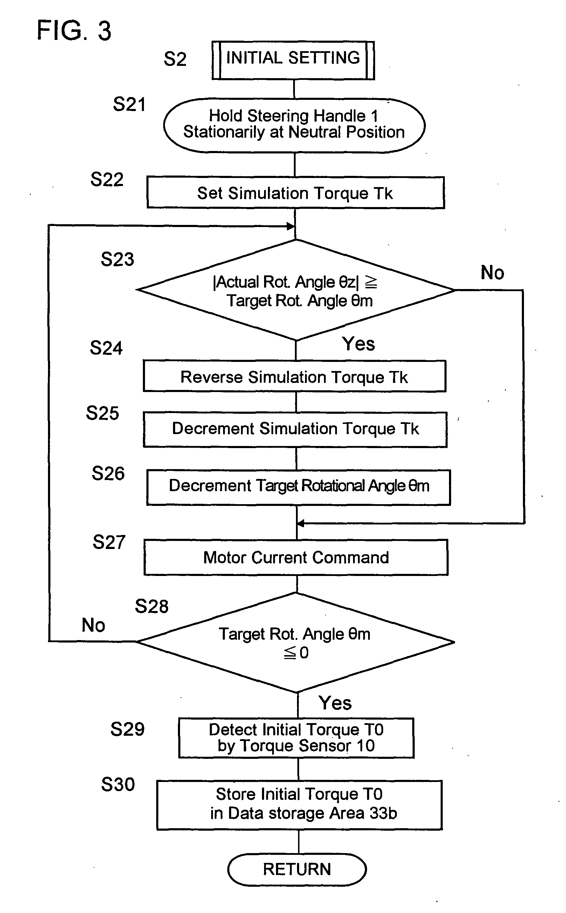

Next, the details of the steering control will be described with reference to the flow charts shown in Figures 2 and 3. Figure 2 shows the general configuration of the steering control program, in accordance with which the CPU 31 watches for a trigger signal from the external device, and upon receipt of the trigger signal (YES at step S1), proceeds to the initial setting program S2 shown in Figure 3. In the absence of the trigger signal (NO at step S1), the CPU 31 checks whether or not, the handle shaft 2 has begun to rotate with the steering handle 1, from the variation in the angular difference between the pair of resolvers 12, 12 (step S3). When the handle shaft 2 has begun to rotate (YES at step S3), the CPU 31 detects the steering angle of the handle shaft 2 and the steering torque by the torque sensor 10 (step S4). Then, the CPU 31 operates the motor driver 22 and drives the assist motor 20. On the other hand, when the handle shaft 2 is not rotated (NO at step S3), the CPU 31 terminates the program to execute nothing.

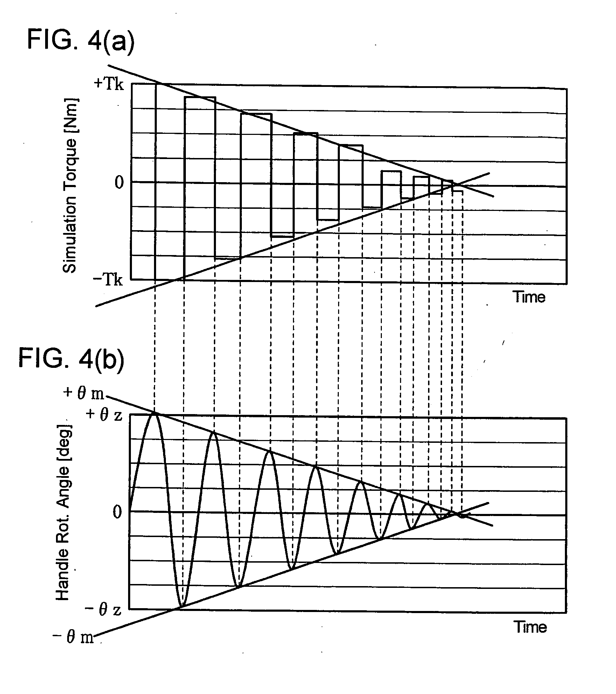

Figure 3 shows the details of the initial setting program S2. First of all, the CPU 31 at step S21 instructs the worker to rotate and hold the steering handle 1 stationarily at the neutral position in the steering direction, and thus, the worker does so in response thereto. Then, the CPU 31 at step S22 sets a simulation torque value (Tk) (e.g., +2N · m) to be applied to the steering handle 1, and at step S23, compares a target rotational angle (θm) to which the steering handle 1 is assumed to be rotated minutely based on the simulation torque value (Tk), with the absolute value of an actual rotational angle (θz) being detected by the torque sensor 10. Since at the time of starting, the steering handle 1 is held stationarily at the neutral position in the steering direction, there comes |θz| < θm (i.e., NO at step S23). The CPU 31 proceeds to step S27 to apply to the assist motor 20 an electric current corresponding in current value and application time period to the simulation torque value (Tk) (i.e., the target rotational angle θm). For example, an electric current corresponding to +2N • m is applied to the assist motor 20 for 60 milliseconds as referred to Figure 4(A). Since the target rotational angle (θm) is larger than zero (0) first at step S28 (i.e., NO at step S28), return is made to step S23 to again compare the target rotational angle (θm) with the absolute value of the actual rotational angle (θz). When there comes |θz| > θm (i.e., YES at step S23), the CPU 31 reverses the simulation torque value (Tk) at step S24 and decreases or decrements the same at step S25 (e.g., to -1.5 N • m) to diminish the target rotational angle (θm) in correspondence thereto at step S26). Then, the CPU 31 at step S27 applies to the assist motor 20 an electric current corresponding in current value and application time period to the simulation torque value (Tk) (i.e., a target rotational angle (θm)) which is set again through steps S24 and S25. For example, an electric current corresponding to -1.5N • m is applied to the assist motor 20 for 60 milliseconds, as referred to Figure 4(a).

Through the repetitive executions of steps S24 to S27, there may be executed at least one of the processing for decreasing the absolute value of the electric current flown through the assist motor 20 and the processing for shortening the time period for which the electric current is applied to the assist motor 20. In this particular instance exemplied in Figure 4(a), both of the aforementioned two processing are executed, whereby the absolute value of the torque value which causes the steering handle 1 to turn repetitively in positive and negative going directions is made smaller and smaller as time goes by. It results accordingly that the steering handle 1 is rotated by the assist motor 20 periodically in the positive and negative-going directions in response to the predetermined torque value (i.e., the simulation torque value (Tk)). While the torque sensor 10 detects the torque applied by the assist motor 20 during these steps of processing, the assist motor 20 is controlled to drivingly rotate the steering handle 1 a minute angle based on the simulation torque value (Tk) which has been set in advance in accordance with the initial setting program independently of the torque value detected by the torque sensor 10.

Subsequently, when the target rotational angle (θm) is decreased to zero or below (i.e., YES at step S28), the minute rotational motion of the steering handle 1 by the assist motor 20 is terminated under the judgment that the residual torque should have been decreased sufficiently (i.e., approximately zero), and then an initial torque T0 (e.g., +0.2 N • m) is detected by the torque sensor 10 at step S29. Then, the CPU 31 at step S30 stores the detected initial torque T0 as a compensation value in steering torque control, in the data storage area 33b of the steering control section 30.

It is to be noted that in order to advance the routine from step S21 to the next thereto, the program may be arranged to make the worker push a confirmation switch when the worker confirms that the steering handle 1 has been held stationarily at the neutral position.

In the aforementioned manner, according to the residual torque decreasing processing shown in Figure 3, the assist motor 20 is operated to rotate the steering handle 1 with the predetermined torque value repetitively in the positive and negative-going directions while gradually decreasing or decrementing the absolute value of the torque value in connection with the time passage. Therefore, it becomes realized to restrain the occurrence of the imperfect returning phenomenon (i.e., hysteresis phenomenon) of the steering handle 1 thereby to decrease (or, eliminate) the residual torque within a short period of time to the extent that the same no longer obstructs the steering control operation. Further, the drive torque of a DC motor is in proportion to the value of an electric current flown therethrough. Therefore, in the processing for diminishing the residual torque, if the value of an electric current flown through the assist motor 20 is taken as an objective or target to be controlled, it becomes possible to precisely control the torque value of the assist motor (DC motor) 20.

Herein, means for decreasing the rotational power (torque) which is applied by the assist motor 20 to the steering handle 1 can be selected from the followings:
(i) Means for gradually decreasing the electric current value,
(ii) Means for gradually shortening the time period of current application, or
(iii) Means for operating the means (i) and (ii) simultaneously.

The followings are the points to which cares are to be taken in executing the initial setting program stored in the steering control section 30 at inspection processes of manufacturing sites, factory floors or the like or at service sites of car dealers or the like.
(i) The initial setting program is to be started with the steering handle 1 being held stationarily at the neutral position in the steering direction.
(ii) No torque is to be applied to the steering handle 1 from the external including the worker after step S22 and those steps successive thereto.
(iii) It does not matter if the steerable wheels 6, 6 are to be kept touch on or off the floor.

### (Modification)

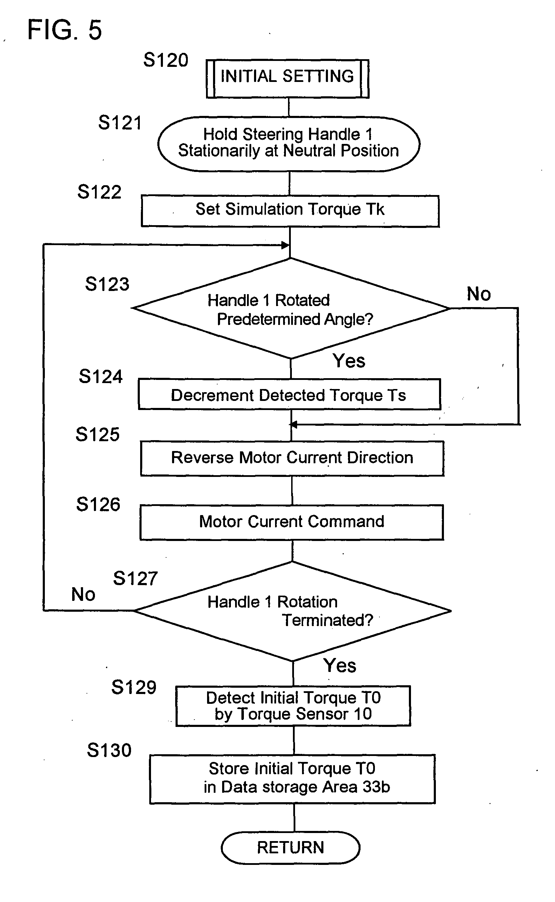

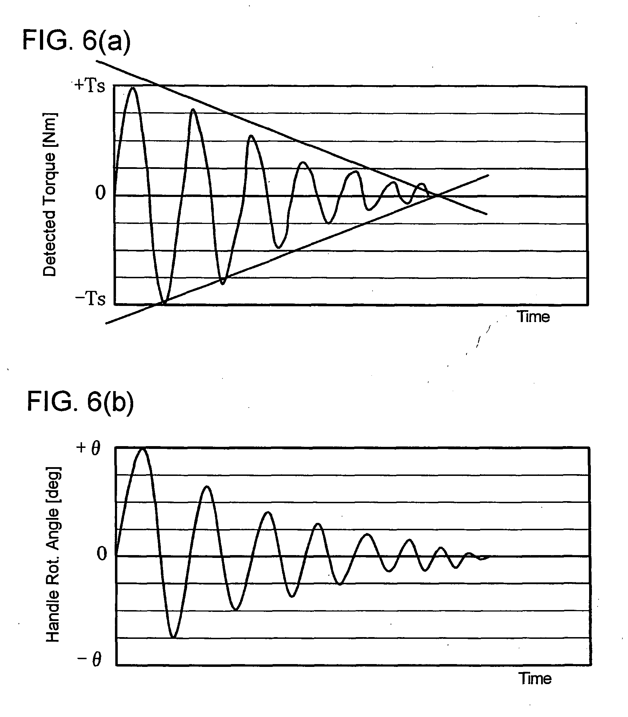

Figure 5 shows a flow chart modified from that shown in Figure 3, and Figure 6 is an explanatory view showing the state of a processing for decreasing the residual torque in accordance with the processing shown in Figure 5. Steps S23 through S28 in Figure 3 for decrementing the residual torque are altered and shown as steps S123 through S127 in Figure 5. In the residual torque decreasing processing according to this initial setting program S120, the assist motor 20 is rotated reversibly so that the steering handle 1 is given the rotational force in the negative or positive-going direction in dependence upon the plus or minus of a torque value detected by the torque sensor 10.

In Figure 5, step S122 is executed to set a simulation torque value (Tk) (e.g., +2N • m) to be applied to the steering handle 1 in the same manner as was done in the processing shown in Figure 3. That is, the steering handle 1 in the first rotation is rotated at a predetermined torque value (i.e., the simulation torque value (Tk)) and in a predetermined rotational direction. Whether or not, the steering handle 1 has been turned a predetermined angle is confirmed at step S123 by reference to the torque value detected by the torque sensor 10. If the rotation through the predetermined angle has been attained (i.e., YES at step S123), the steering handle 1 is then rotated to cancel the torque value (Ts) so that the residual torque can be decreased (or, eliminated). Specifically, a smaller torque than the detected torque value (Ts) is set at step S124 and the direction of the electric current flown through the assist motor 20 is reversed at step S125, after which an electric current corresponding to the smaller torque is applied to the assist motor 20 to flow in the reversed direction at step S126.

Then, because of NO at step S127 at the beginning of the processing, return is made to step S123 for repeating the residual torque decreasing (or, elimination) processing while gradually diminishing the detected torque value (Ts) and while switching the turning direction form one direction to the other direction and vice versa. As a result, the detected torque value (Ts) is gradually made smaller (i.e., smaller and smaller), so that it no longer becomes to have a drive power (rotational force) to turn the steering handle 1. This can be confirmed at step S127 (i.e., YES at step S127), in which state an initial torque (T0) is detected by the torque sensor 10 at step S129, and the detected initial torque (T0) is stored in the data storage area 33b at step S130. It is to be noted that the steps in Figure 5 having the same or corresponding functions to those in Figure 3 are denoted by reference numerals which are same at least two digits as those used in Figure 3.

In this manner, the assist motor 20 in this particular modification periodically repeats the rotations in the positive and negative-going directions as depicted in Figures 6(a) and 6(b), so that the steering handle 1 can be given a rotational power in the negative or positive-going direction (i.e., the rotational power to cancel the detected torque power) in dependence on the plus or minus sign of the torque value detected by the torque sensor 10. In short, the residual torque can be diminished (or, eliminated) only through a relatively simplified control of providing the assist motor 20 with a rotational power which can cancel the torque value detected by the torque sensor 10.

Herein, means for decreasing the rotational power (torque) which is applied by the assist motor 20 to the steering handle 1 can be selected, in the same manner as done in the embodiment shown in Figures 3, 4(a) and 4(b), from the followings:
(i) Means for gradually decreasing the electric current value,
(ii) Means for gradually shortening the time period of current application, or
(iii) Means for operating the means (i) and (ii) simultaneously.

### (Second Embodiment)

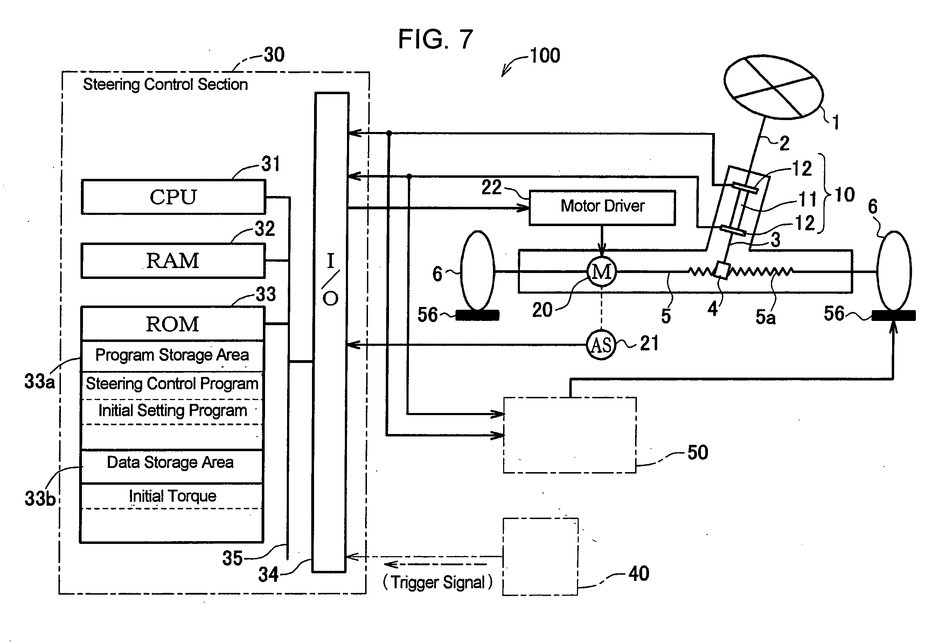

Next, a power steering device 100 in the second embodiment will be described in detail with reference to Figures 7 through 11 as well as Figures 4(a) and 4(b) as used in the foregoing first embodiment. The power steering device 100 in the second embodiment basically takes the same construction as the foregoing first embodiment shown in Figure 1 except for the following additional construction. That is, in the second embodiment shown in Figure 7, the assist motor 20 driven by the motor driver 22 generates a drive power which corresponds to the applied torque to the torsion bar 11 detected by the torque sensor 10.

Moreover, in the second embodiment, when an initial setting processing is carried out, the vehicle with the power steering device 100 is parked or placed on a flat floor. A pair of turntables 56, 56 are placed so that mounting surfaces thereof for the steerable wheels 6, 6 lie at the same level as the floor. When the vehicle is lifted up with a suitable lift or jack to make the steerable wheels 6, 6 ungrounded, the turntables 56, 56 are moved up and down in dependence on the height of the steerable wheels 6, 6, so that the same load as exerted when the vehicle is grounded on the floor is applied on each of the turntables 6, 6.

The steering control section 30 basically takes the same construction as described in connection with the foregoing first embodiment. A residual toque elimination control section 50 is further provided, which is responsive to signals from the resolvers 12, 12 for controlling the turntables 56, 56, as described later in detail. When having the trigger signal input thereto, the CPU 31 of the steering control section 30 reads an initial setting program from the program storage area 33a of the ROM 33 and executes at least the following processing of the read-out program in the order of steps described below. That is, the CPU 31:
(i) in the state that the residual torque has been diminished, detects by the torque sensor 10 an initial torque which is generated by the cause of the difference in origin position between the pair of resolvers 12, 12, and
(ii) then stores the detected initial torque as a compensation value in steering torque control, in the data storage area 33b (i.e., initial torque storage means) of the steering control section 30.

Desirably, like that in the foregoing first embodiment, the data storage area 33b in this second embodiment may be constituted by an E²PROM (Electrically Erasable Programmable Read-Only Memory) so that the initial torque can be written thereinto each time the initial setting is done.

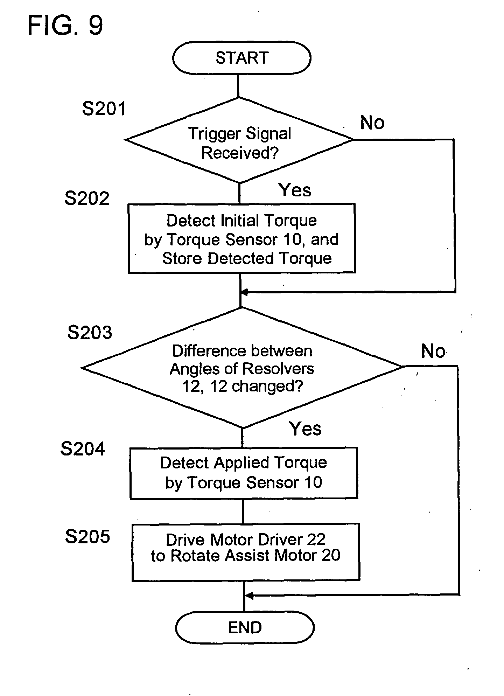

Next, the details of the steering control will be described with reference to the flow charts shown in Figure 9. Figure 9 shows the general configuration of the steering control program. In accordance with this program, the CPU 31 watches for the trigger signal from the external device, and upon receipt of the trigger signal (YES at step S201), detects an initial toque by the torque sensor 10 to store the initial torque in the data storage area 33b at step S202. In the absence of the trigger signal (NO at step S201), the CPU 31 checks whether or not, a torque has been applied on the torsion bar 11, from the variation in the angular difference between the pair of resolvers 12, 12 (step S203). When the angular difference has taken place on the resolvers 12, 12 (YES at step S203), the CPU 31 detects the applied torque by the torque sensor 10 (step S204). Then, the CPU 31 operates the motor driver 22 and drives the assist motor 20 with a drive power corresponding to a net torque which is obtained by compensating the applied torque detected by the torque sensor 10 for the initial torque stored in the data storage area 33b (step S205). On the other hand, when there occurred no angular difference on the resolvers 12, 12 (NO at step S203), the CPU 31 terminates the program to execute nothing.

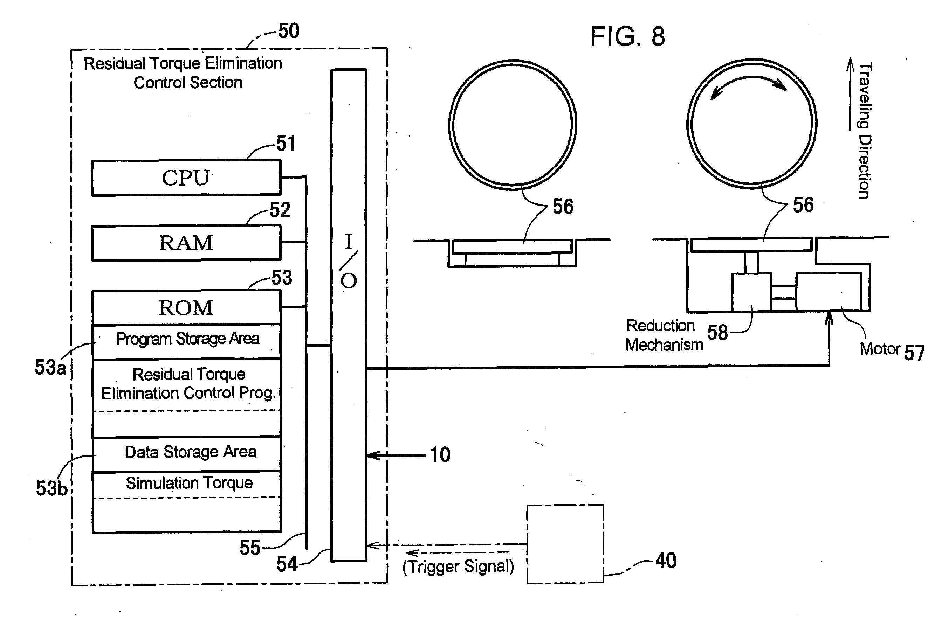

As shown in Figure 8, the residual toque elimination control section 50 is composed of a CPU 51, a RAM 52, a ROM 53, an input/output interface 54 or the like, which are connected via a bus 55 for data transmission and receiving thereby to constitute a microcomputer. The ROM 53 includes a program storage area 53a and a data storage area 53b. The program storage area 53a has stored a residual toque elimination control program therein, while the data storage area 53b is to store an simulation torque, as referred to later.

The residual toque elimination control section 50 is connected to the torque sensor 10 and a motor 57 via the input/output interface 54. The motor 57 is able to rotate turntables 56, 56 within a minute angular range through a reduction mechanism 58. In this particular embodiment shown in Figure 8, only the turntable 56 at the right side in the vehicle traveling direction is rotatable by the motor 57, while the other turntable 56 at the left side in the vehicle traveling direction is left rotatable freely. However, there may be taken such a construction that both of the turntables 56, 56 at the right and left sides are rotatable within the minute angular range.

In this particular embodiment, a small-sized tester (i.e., a portable terminal device) 40 is temporally or permanently brought into connection with the input/output interface 54, and the residual torque elimination control program is prepared to be started upon receipt of the particular trigger signal transmitted from the small-sized tester 40. Of course, in a modified form, there may be utilized an external microcomputer which is equipped in a manufacturing plant or the like, in which case the residual torque elimination control program may be downloaded from the microcomputer by way of a communication line, a suitable storage medium or the like to the residual torque elimination control section 50, and the residual torque elimination control program may be started upon receipt of the trigger signal from the external microcomputer.

When having the trigger signal input thereto, the CPU 51 reads the residual torque elimination control program from the program storage area 53a of the ROM 53 and executes the residual torque elimination control program. That is, in the state that the steering handle 1 is held stationarily at the neutral position in the steering direction, the CPU 51 operates the motor 57 to rotate the turntable 56 a minute angle, so that a residual torque remaining as hysteresis between the steering handle 1 and the torque sensor 10 can be decreased or eliminated.

Desirably, the data storage area 33b may be constituted by an E²PROM which is capable of performing electrical writing-in and electrical erasion so that a simulation torque suitable to the construction of the power steering device 100 can be written thereinto.

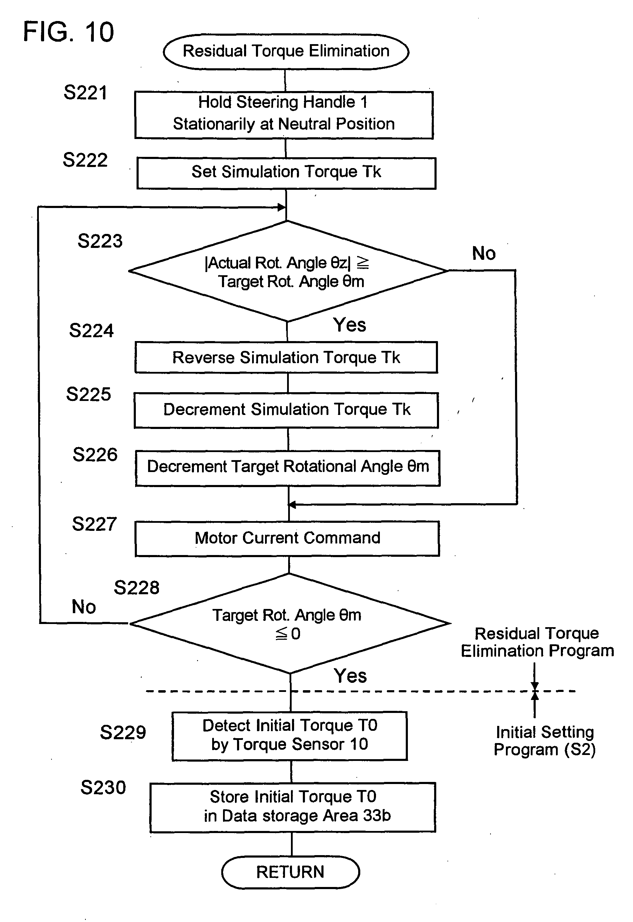

The details of the residual torque elimination control program and the initial setting program will be described with reference to Figure 10. First of all, the CPU 51 at step S221 instructs the worker to rotate and hold the steering handle 1 stationarily at the neutral position in the steering direction, and thus, the worker does so in response thereto. Then, the CPU 51 at step S222 sets a simulation torque value (Tk) (e.g., +2N • m) to be applied to the turntable 56, and at step S223, compares a target rotational angle (θm) through which the turntable 56 is assumed to be rotated minutely based on the simulation torque value (Tk), with the absolute value of an actual rotational angle (θz) being detected by the torque sensor 10. Since at the time of starting, the turntable 56 is held stationarily at the neutral position in the steering direction, there comes |θz| < θm (i.e., NO at step S223). The CPU 51 proceeds to step S227 to apply to the motor 57 an electric current corresponding in current value and application time period to the simulation torque value (Tk) (i.e., the target rotational angle θm). For example, an electric current corresponding to the torque of +2N • m is applied to the motor 57 for 60 milliseconds as referred to Figure 4(a). Since the target rotational angle (θm) is larger than zero (0) first at step S228 (i.e., NO at step S228), return is made to step S223 to again compare the target rotational angle (θm) with the absolute value of the actual rotational angle (θz). Then, there comes |θz| ≧θm (i.e., YES at step S223), and the CPU 51 reverses the simulation torque value (Tk) at step S224 and decreases or decrements the same at step S225 (e.g., to -1.5 N • m) to diminish the target rotational angle (θm) in correspondence thereto at step S226. Then, the CPU 51 at step S227 applies to the motor 57 an electric current corresponding in current value and application time period to the decreased simulation torque value (Tk) (i.e., a target rotational angle θm) which has been set again through steps S224 to S226. For example, an electric current corresponding to -1.5N m is applied to the motor 57 for 60 milliseconds, as referred to Figure 4(a).

Through the repetitive executions of steps S224 to S227, there is executed at least one of the processing for decreasing or decrementing the absolute value of the electric current flown through the motor 57 and the processing for shortening the time period for which the electric current is applied to the motor 57. In this particular instance exemplified in Figure 4(a), both of the aforementioned two processing are executed, whereby the absolute value of the torque value which causes the turntable 56 to turn repetitively in positive and negative going directions is made smaller and smaller as time goes by. It results accordingly that the turntable 56 is turned by the motor 57 periodically in the positive and negative-going directions with the predetermined torque value (i.e., the simulation torque value (Tk)) being kept. While the torque sensor 10 continues to detect the torque applied by the motor 57 during these steps of processing, the motor 57 is controlled to drivingly turn the turntable 56 a minute angle at the simulation torque value (Tk) which has been set in advance in accordance with the residual torque elimination program independently of the torque value detected by the torque sensor 10. Thereafter, when the target rotational angle (θm) is judged at step S228 to have become zero or smaller than zero (i.e., YES at step S228), the minute turning motion by the motor 57 is terminated (stopped) under the judgment that the residual torque has been diminished sufficiently (i.e., approximately to zero). The transitions of the target rotational angle θm and the actual rotational angle (θz) are represented as shown in Figure 4(b).

Subsequently, the trigger signal is transmitted from the tester 40 to the steering control section 30. In response to the trigger signal, the CPU 31 of the steering control section 30 executes the initial setting program to detect an initial torque (T0), e.g., +0.2 N · m) by the torque sensor 10 at step S229. Then, the CPU 31 at step S230 stores the detected initial torque (T0) as a compensation value in steering torque control, in the data storage area 33b of the steering control section 30.

It is to be noted that in order to advance the routine from step S221 to the next thereto, the program may be arranged to make the worker push a confirmation switch when the worker confirms that the steering handle 1 has been held stationarily at the neutral position.

In the aforementioned manner, according to the residual torque decreasing or decrementing processing shown in Figure 10, the steerable wheels 6, 6 are turned by the turntables 56, 56 with the torque of the predetermined value repetitively in the positive and negative-going directions while decrementing the absolute value of the torque value as time passes. As a consequence, it becomes realized to restrain the occurrence of the imperfect returning phenomenon (i.e., hysteresis phenomenon) of the steering handle 1 thereby to decrease (or eliminate) the residual torque within a short period of time to the extent that the same no longer obstructs the steering control operation. Further, the drive torque of a DC motor is in proportion to the value of an electric current flowing therethrough. Therefore, in the processing for decreasing the residual torque, if the value of an electric current flowing through the motor 57 is taken as an objective or target to be controlled, it becomes possible to precisely control the torque value of the motor (DC motor) 57.

Herein, means for decreasing the rotational power (torque) applied by the motor 57 to the turntable 56 can be selected from the followings:
(i) Means for gradually decreasing the electric current value,
(ii) Means for gradually shortening the time period of current application, or
(iii) Means for operating the means (i) and (ii) simultaneously.

### (Modifications of Second Embodiment)

Although the turntable 6 is turned by the motor 57 in the aforementioned residual torque elimination control, it may be oscillated by a solenoid substituting for the motor 57, or it may be oscillated by utilizing magnetic attraction and repelling forces in the combination of an electromagnet and a permanent magnet.

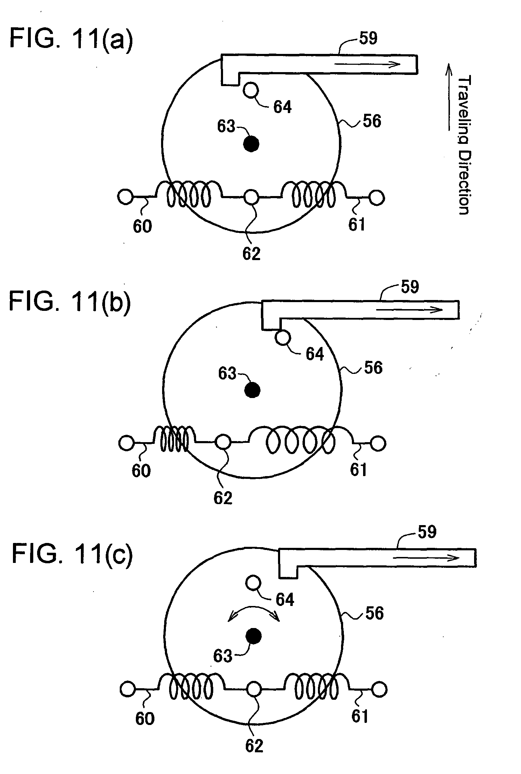

Besides, there may be practiced a method of oscillating the turntable 6 as exemplified in Figure 11(a) to 11(c) without using any motor drive. This modified method will be described hereinafter. Figures 11(a) to 11(c) show the turntable 56 in this modification as viewed from the bottom thereof. As shown in Figure 11(a), the connecting portion 62 of springs 60, 61 connected in series is secured to the turntable 56, and respective opposite ends of these springs 60, 61 are secured to those portions outside the turntable 56 with each of these springs 60, 61 extending perpendicularly to the direction in which the vehicle travels. Thus, the springs 60, 61 act as elastic support means for applying two urging forces which are opposite in direction to urge but equal to each other in magnitude, to the turntable 56 in the turn direction of the same so that the turntable 56 is held at its neutral position but allowed to turn against the urging forces of the springs 60, 61.

A protrusion 64 is provided on the turntable 56 at a portion opposite to the connecting portion 62 with respect to a rotational center 63 of the turntable 56. A shaft 59 of an L-letter shape is further provided to draw the protrusion 64 toward the left, as viewed from the top of the turntable 56, of the direction in which the vehicle travels. That is, the shaft 59 operates as oscillation starting means for turning the turntable 56 to a predetermined angular position shown in Figure 11(b) within the minute angular range in one direction against one of the springs 60, 61 and then for releasing the turntable 56 when the predetermined angular position is reached, thereby to enable the turntable 56 to oscillate in the positive and negative-going directions until the oscillation is gradually decreased to zero due to the natural decremental action of the springs 60, 61.

In operation, when the shaft 59 is drawn, the protrusion 64 is also drawn in the same direction as the shaft 50 is drawn. When the shaft 59 is drawn to the predetermined position shown in Figure 11(b), the protrusion 64 is disengaged from the shaft 59. At this time, the springs 60, 61 oscillate by their memories while gradually diminishing the amplitudes of their oscillations, and so does the turntable 56. With the oscillatory motion of the turntable 56, the steerable wheel 6 placed thereon oscillates thereby to eliminate the residual torque. Further, the other steerable wheel 6, together with the other turn table 56, also oscillates because the two steerable wheels 6, 6 are connected to each other through the steering linkage.

As the springs 60, 61 in this modification, there are employed those of the characteristic capable of providing the simulation torque as shown in Figure 4(a). Further, no particular restriction is imposed on the means for drawing the shaft 59 as long as it is controllable like the combination of a motor and gears, like a solenoid or like a fluid cylinder or so forth. Furthermore, in place of the shaft 59, there may be used an arrangement in which a cam to contact with the protrusion 64 is provided with a rotational shaft being located outside the turntable 56. No particular restrictions are imposed on the mounting positions for the springs 60, 61, the shaft 59 and the protrusion 64 as long as they are arranged to be able to eliminate the residual torque.

After the residual torque is eliminated as mentioned earlier, the trigger signal is transmitted from the small-sized tester 40 to the steering control section 30, and the initial setting program is executed, whereby the initial torque (T0) is detected by the torque sensor 10 to be stored in the data storage area 33b.

The followings are the points to which cares are to be taken in executing the residual torque elimination control program stored in the residual torque elimination control section 50 and the initial setting program stored in the steering control section 30 at inspection processes of manufacturing sites, factory floors or the like or at service sites of car dealers or the like.
(i) The starting is to be effected with the steering handle 1 being held stationarily at the neutral position in the steering direction.
(ii) No torque is to be applied to the steering handle 1 as well as to the steerable wheels 6, 6 from the external including the worker after step S222 and those steps successive thereto.
(iii) And, the steerable wheels 6, 6 are to be kept placed on the turntables 56, 56.

Although the power steering device of the rack assist type has been taken in the foregoing description of the first and second embodiments, it is needless to say that the present invention may be applicable to that of a column assist type. Moreover, as long as the steering handle 1 and the steerable wheels 6, 6 are connected mechanically, the present invention may be practiced in power steering devices of the type that the steering force is variable like, e.g., a speed responsive type, a rotational speed responsive type or the like. Furthermore, besides electric motor, hydraulic motor, hydraulic cylinder or the like may be used to constitute the assist power generating means. In the residual torque decreasing processing at steps S24 to S27 shown in Figure 3 in the first embodiment or at steps S224 to S227 shown in Figure 10 in the second embodiment, a modification may be made that after minute turn motions are carried out plural times with a predetermined simulation torque value (Tk) having been set (e.g., ±2 N • m), the simulation torque (Tk) may be made smaller (e.g., to ±1.5 N • m) prior to the subsequent minute turn motions at the plural times.

Obviously, numerous modifications and variations of the present invention are possible in light of the above teachings. It is therefore to be understood that within the scope of the appended claims, the present invention may be practiced otherwise than as specifically described herein.

A power steering device is provided which is capable of detecting an initial torque of torque detection means precisely in a short period of time in the initial setting therefor. In detecting the initial torque of the torque detection means, assist power generating means such as an electric motor for applying assist power to a handle shaft is used to rotate a steering handle within a minute rotational range in positive and negative-going directions from a neutral position in the steering direction. The rotation of the steering handle in this initial setting is performed so that the amplitude of the repetitive rotations in the positive and negative-going directions are decremented as time passes. Then, an output of the torque detection means is detected as the initial torque with the steering handle being held stationarily at the neutral position. In another aspect of the present invention, a zero-point detection device for a torque sensor in a power steering device is provided having steerable wheel oscillating means which comprises turntables rotatable within a minute rotational range in positive and negative going directions and a turntable oscillating device for oscillating the turntables within the minute angular range in its steering direction by applying a drive power of a decremental pattern so that the amplitude of the oscillation is decreased gradually. Upon termination of the oscillation, an output of the torque detection means is detected as the initial torque with the steering handle being held stationarily at the neutral position.

## Claims

1. A power steering device of the type wherein a steering torque applied to a handle shaft through a steering handle is detected by torque detection means and wherein a drive power corresponding to said steering torque is applied from assist power generating means to steerable wheels, said power steering device comprising:
residual torque decreasing command means for operating said assist power generating means to turn said steering handle a minute rotational angle in positive and negative-going directions about a handle axis after said steering handle is once held stationarily at a neutral position in the steering direction so that a residual torque remaining as hysteresis between said steering handle and said torque detection means can be decreased.

2. A power steering device of the type wherein a steering torque applied to a handle shaft through a steering handle is detected by torque detection means which is provided with a torsion bar and a pair of angle detection sensors arranged apart from each other in the axial direction of said torsion bar and wherein a drive power corresponding to said steering torque is applied from assist power generating means to steerable wheels, said power steering device comprising:
residual torque decreasing command means for operating said assist power generating means to turn said steering handle a minute rotational angle in positive and negative-going directions about a handle axis after said steering handle is once held stationarily at a neutral position in the steering direction so that a residual torque remaining as hysteresis between said steering handle and said torque detection means can be decreased; and
initial torque detection command means for making said assist power generating means terminate the minute angle rotational motion and for issuing a command to detect by said torque detection means an initial torque which is caused primarily by the difference in origin position between said pair of angle detection sensors, with said residual torque having been decreased.

3. A power steering device of the type wherein a steering torque applied to a handle shaft through a steering handle is detected by torque detection means which is provided with a torsion bar and a pair of angle detection sensors arranged apart from each other in the axial direction of said torsion bar and wherein a steering control section issues a command signal for applying a drive power corresponding to said steering torque, from an electric motor as assist power generating means to steerable wheels, said power steering device comprising:
residual torque decreasing command means for operating said assist power generating means to turn said steering handle a minute rotational angle in positive and negative-going directions about a handle axis after said steering handle is once held stationarily at a neutral position in the steering direction so that a residual torque remaining as hysteresis between said steering handle and said torque detection means can be decreased;
initial torque detection command means for making said assist power generating means terminate the minute angle rotational motion and for issuing a command to detect by said torque detection means an initial torque which is caused primarily by the difference in origin position between said pair of angle detection sensors, with said residual torque having been decreased; and
initial torque storage command means for storing said initial torque as a compensation value in steering torque control, in initial torque storage means of said steering control section.

4. A power steering device as set forth in Claim 3, wherein said residual torque decreasing command means, said initial torque detection command means and said initial torque storage command means are stored together with an initial setting program in said steering control section, and wherein said initial setting program is executed in response to a particular trigger signal which is transmitted from an external device other than a vehicle mounting said power steering device thereon.

5. A power steering device as set forth in Claim 3, wherein said residual torque decreasing command means is operable to issue a command for operating said assist power generating means to repetitively turn said steering handle with a torque of a predetermined value in the positive and negative-going directions.

6. A power steering device as set forth in Claim 5, wherein said residual torque decreasing command means is operable to issue said command for operating said assist power generating means to repetitively turn said steering handle with said torque of said predetermined value in the positive and negative-going directions and for decreasing the absolute value of said torque of said predetermined value as time goes by.

7. A power steering device as set forth in Claim 6, wherein said residual torque decreasing command means is operable to issue at least one of a command for decreasing the absolute value of an electric current flown through said electric motor and another command for shortening the time period to apply said electric current to said electric motor so that the absolute value of said torque to repetitively turn said steering handle in the positive and negative-going directions is decreased as time goes by.

8. A power steering device as set forth in Claim 5, wherein said residual torque decreasing command means is operable to issue a command for reversing the direction of said electric current flown through said electric motor in the positive and negative-going directions so that said steering handle is repetitively turned in the positive and negative-going directions with said torque being kept at said predetermined value.

9. A power steering device as set forth in Claim 8, wherein said steering handle is turned by said electric motor periodically in the positive and negative-going directions with said torque being kept at said predetermined value independently of the torque value detected by said torque detection means.

10. A power steering device as set forth in Claim 8, wherein said steering handle is turned by said electric motor in the positive and negative-going directions to be given a negative-going rotational power or a positive-going rotational power in dependence on the plus or minus of the torque value detected by said torque detection means.

11. A zero-point setting device for a torque sensor in a power steering device having a torque sensor provided in a steering power transmission system from a steering handle to steerable wheels of a vehicle for detecting a steering torque and steering control means for controlling a steering drive device to apply a steering power to said steerable wheels, said zero-point setting device comprising:
steerable wheel oscillating means operable prior to detecting a zero-point torque error of said torque sensor in the state that said steerable wheels are held at a reference position such as a neutral position or the like with said steering handle being not given any steering torque applied thereto, for oscillating said steerable wheels within a minute angular range in the steering direction so that the amplitude of the oscillation is gradually decreased to the termination of the oscillation;
zero-point torque detection means for detecting an output of said torque sensor as said zero-point torque error at or around at the termination of said oscillation;
storage means for storing said zero-point torque error in a storage area of said steering control means so that in the later actual operation of said steering drive device, the same is controlled by said steering control means based on a compensated torque which is calculated from both of an output from said torque sensor and said zero-point torque error stored in said storage means.

12. A zero-point setting device for a torque sensor in a power steering device as set forth in Claim 11, wherein said steerable wheel oscillating means comprises:
turntables adapted to have said steerable wheels respectively placed thereon and provided to oscillate horizontally rotationally within at least said minute angular range with said steerable wheels being respectively placed thereon; and
a turntable oscillating device for oscillating at least one of said turntables within a minute angular range in its steering direction by applying a drive power of a decremental pattern so that the amplitude of the oscillation is decreased gradually.

13. A zero-point setting device for a torque sensor in a power steering device as set forth in Claim 12, wherein said turntable oscillating device comprises:
a oscillation applying motor for driving said at least one turntable within said minute angular range in positive and negative-going directions; and
motor control means for controlling the electric power to said oscillation applying motor so that the amplitude of the oscillation is varied in said decremental pattern.

14. A zero-point setting device for a torque sensor in a power steering device as set forth in Claim 12, wherein said turntable oscillating device comprises:
elastic support means for applying two urging forces which are opposite in direction to urge but equal to each other in magnitude, to said at least one turntable in the turn direction of the same so that said at least one turntable is held at its neutral position but allowed to turn against said two urging forces; and
oscillation starting means for turning said at least one turntable to a predetermined angular position within said minute angular range in one direction against one of said two urging forces and then for releasing said at least one turntable when said predetermined angular position is reached so that the oscillation of said turntable in said positive and negative-going directions is initiated to be gradually decreased to zero due to the natural decremental action of said elastic support means.

15. A zero-point setting device for a torque sensor in a power steering device as set forth in Claim 11, wherein said torque sensor comprises:
a torsion bar connected at axial opposite ends thereof with facing ends of two shaft members constituting said steering power transmission system;
two twist angle sensors provided at said axial opposite ends of said torsion bar for respectively detecting twist angles of said axial opposite ends of said torsion bar; and
means for detecting the twist torque of said torsion bar based on the difference in output between said two twist angle sensors.
